# FASCICULE DE BREVET EUROPEEN

(11) **EP 0 591 064 B1**
(45) Date de publication et mention de la délivrance du brevet: **08.01.1997**
(21) Numéro de dépôt: 93402413.4
(22) Date de dépôt: 01.10.1993
(51) Int. Cl.: F16D 48/04

(54) **Actionneur électro-hydraulique**
Elektrohydraulisches Stellglied
Electro hydraulic actuator

(30) Priorité: 01.10.1992 FR 9211921
(43) Date de publication de la demande: 06.04.1994
(73) Titulaire: VALEO, 75017 Paris (FR)
(72) Inventeur: Michel, Robert, F-95540 Méry sur Oise (FR); Ledamoisel, Claude, F-95550 Bassancourt (FR); Randriazanamparany, Vévé Roland, F-92500 Rueil-Malmaison (FR); Haberbusch, André, F-80260 Poulainville (FR)
(74) Mandataire: Gamonal, Didier

(56) Documents cités:
- EP-A- 0 493 992
- DE-A- 2 329 840
- US-A- 5 070 983

## Description

L'invention concerne un actionneur électro-hydraulique plus particulièrement destiné à la commande d'un embrayage à friction du type piloté.

Le document EP-A-0493 992, conforme au préambule de la revendication 1, décrit un actionneur pour la commande d'un embrayage à friction piloté doté d'un diaphragme. Cet actionneur comporte un corps d'alimentation en communication avec une chambre de commande et avec une électrovalve. Des moyens d'amortissement des vibrations sont nécessaires car l'électrovalve est mise en vibration de façon classique. Les moyens d'amortissement permettent d'éliminer les bruits au niveau de la butée d'embrayage.

L'invention concerne un actionneur électro-hydraulique destiné notamment au même usage mais de structure plus simple et plus économique nécessitant un moins grand nombre de pièces, d'assemblage plus simple.

Plus précisément, l'invention concerne donc un actionneur électro-hydraulique, notamment pour la commande d'un embrayage piloté, comportant un corps abritant une électrovalve du type à battement, des moyens d'amortissement des vibrations et un ensemble hydromécanique comprenant un agencement formant piston mobile dans un alésage fixe et auquel est connecté un élément d'actionnement, la sortie de l'électrovalve communiquant avec une cavité où se trouve ledit ensemble hydromécanique, caractérisé en ce que les moyens d'amortissement consistent en un amortisseur hydropneumatique, muni d'une paroi mobile ou déformable, logé dans ladite cavité et en ce que ledit amortisseur constitue une butée de repos de l'agencement formant piston de sorte que l'ensemble hydromécanique et l'amortisseur hydropneumatique sont logés dans le prolongement l'un de l'autre dans une même cavité.

L'amortisseur hydropneumatique peut être constitué d'un élément à paroi mobile ou déformable rempli d'un gaz sous pression, par exemple de l'azote. La pression est typiquement de l'ordre de 3 bars. Les parois de la cavité n'ont pas besoin d'être usinées car l'ensemble hydromécanique peut être agencé (logé) dans un même manchon engagé sans ajustement spécial dans la cavité dudit corps. En outre, l'agencement formant piston comporte avantageusement un mécanisme de rattrapage d'usure mécaniquement couplé à l'élément d'actionnement. L'amortisseur hydropneumatique sert alors simultanément de butée au dit manchon et au mécanisme de rattrapage d'usure.

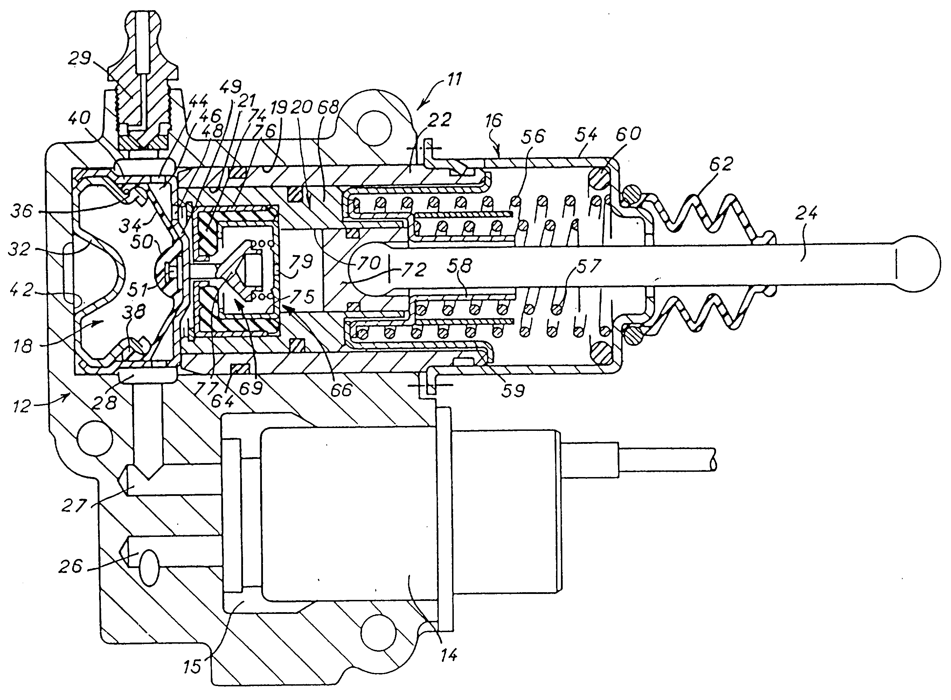

L'invention sera mieux comprise et d'autres avantages de celle-ci apparaîtront plus clairement à la lumière de la description qui va suivre d'un actionneur électro-hydraulique conforme à son principe, donnée uniquement à titre d'exemple et faite en référence au dessin annexé dans lequel:
- la figure unique est une vue en coupe de l'actionneur.

L'actionneur électro-hydraulique 11 représenté comporte un corps métallique 12 moulé dans lequel sont pratiqués des cavités et perçages abritant tous les sous-ensembles du dispositif. Ces sous-ensembles sont au nombre de trois. On distingue une électrovalve 14 du type à battement insérée dans une chambre 15, un ensemble hydromécanique 16 et un amortisseur hydropneumatique 18, ces deux derniers sous-ensembles étant logés dans le prolongement l'un de l'autre, dans une cavité 19 du corps 12. L'ensemble hydromécanique comprend un agencement formant piston 20, mobile dans l'alésage 21 d'un manchon 22 fixe, inséré dans ladite cavité. Un élément d'actionnement 24 est connecté audit agencement formant piston. Le fluide d'actionnement sous pression est appliqué via un conduit 26 du corps 12 à l'entrée hydraulique de l'électrovalve 14. La sortie de cette même électrovalve débouche par un autre conduit 27 dans la cavité 19, au voisinage de l'amortisseur hydropneumatique 18. Le conduit 27 débouche dans cette cavité par l'intermédiaire d'une gorge annulaire 28. Une vis de purge 29 communique également avec cette gorge. Le manchon 22 de l'ensemble hydromécanique est alésé intérieurement pour permettre le coulissement de l'agencement formant piston 20 et il est immobilisé dans le corps 12, en butée contre une partie fixe et rigide dudit amortisseur hydropneumatique. Plus précisément, l'amortisseur hydropneumatique 18 est constitué d'une coupelle métallique 32 fermée par une membrane 34 en matériau élastomère, ledit amortisseur étant rempli d'un gaz sous pression, typiquement de l'azote sous une pression de 3 bars. La coupelle 32 comporte une gorge annulaire 36 dans laquelle vient se loger un bourrelet 38 annulaire de la membrane et un élément formant couvercle 40 est fixé, par exemple serti sur la coupelle fixe de façon à maintenir le bourrelet 38 dans ladite gorge 36. Ainsi, ledit amortisseur 18 constitue un sous-ensemble simplement inséré au fond de la cavité 19 et prenant appui sur une paroi d'extrémité 42 de celle-ci. L'élément 40 formant couvercle comporte plusieurs trous 44 établissant la communication entre la gorge annulaire 28 (c'est-à-dire la sortie de l'électrovalve) et une chambre 46 dont une paroi est constituée par ladite membrane 34. Par ailleurs, un autre trou 48 dans la paroi frontale 49 de l'élément formant couvercle, établit la communication entre cette même chambre et l'alésage 21 précité de l'agencement formant piston. De cette façon, l'huile sous pression est injectée dans la cavité 19 entre l'amortisseur 18 et l'ensemble hydromécanique 16 de façon à pouvoir déplacer l'agencement formant piston lorsque l'électrovalve 14 est commandée électriquement. La partie centrale de la membrane 34 de l'amortisseur comporte un bourrelet 50 dans lequel est inséré un renfort 51, par exemple un renfort métallique. Cette partie centrale repose contre la face interne de la paroi 49 de l'élément formant couvercle, ladite paroi 49 présentant pour ce faire une partie centrale protubérante au manchon 22. Le manchon 22 de l'ensemble hydromécanique est immobilisé dans la cavité 19 en étant en butée contre cette paroi 49 et en étant par ailleurs solidaire d'un couvercle 54 essentiellement tubulaire fixé au corps 12 et s'étendant dans le prolongement axial du manchon 22. Des ressorts 56, 57 sont montés dans ce couvercle et prennent appui par l'intermédiaire de coupelles tubulaires 58, 59 contre les éléments coaxiaux de l'ensemble hydromécanique. Ces ressorts 56, 57 sollicitent les éléments mobiles de l'ensemble hydromécanique vers leur position de repos. La coupelle externe 59 vient en appui en bout de course contre un joint torique 60 inséré au fond dudit couvercle. Ce dernier comporte un trou à son extrémité par lequel l'élément d'actionnement 24 fait saillie axialement. Ce dernier se présente sous la forme d'une tige présentant une rotule à chacune de ses extrémités. Un soufflet 62 en matériau élastomère est monté entre l'extrémité du couvercle et ladite tige. On notera que l'intérieur de la cavité 19 abritant l'amortisseur et l'ensemble hydromécanique n'a pas besoin d'être usiné de façon précise puisque le manchon 22 y est simplement inséré de façon fixe, l'étanchéité étant obtenue par un joint annulaire 64.

Par ailleurs, l'agencement formant piston comporte un mécanisme de rattrapage d'usure 66 mécaniquement couplé à l'élément d'actionnement 24. Plus précisément, ce mécanisme de rattrapage d'usure est installé dans un piston principal 68 alésé dudit agencement formant piston 20. Il comporte un clapet anti-retour 69 logé dans le piston principal entre l'amortisseur et un alésage axial 70 dudit piston principal 68 abritant un piston auxiliaire 72. Ce dernier, monté coulissant dans l'alésage axial 70, comporte un perçage à fond semi-sphérique dans lequel est engagée l'une des rotules de l'élément d'actionnement 24. Le clapet anti-retour comporte un siège 74 en matériau élastomère monté entre deux coupelles métalliques 75, 76 et un élément de fermeture 77 sollicité par un ressort vers ce siège 74 en matériau élastomère. L'élément de fermeture comporte une tige axiale engagée avec jeu dans un palier de la coupelle extérieure 76 et susceptible de rentrer en contact avec la paroi 49 de l'élément formant couvercle 40 dudit amortisseur. La coupelle intérieure 75 comporte un trou 79 permettant le passage de l'huile dans l'alésage axial 70 du piston principal. L'ensemble du clapet anti-retour est bloqué dans le piston principal entre un épaulement de celui-ci et un circlip. Lorsque le piston principal 68 est en butée contre la paroi 49 de l'élément formant couvercle, la tige de l'élément d'obturation 77 est également en butée contre cette paroi et le clapet anti-retour est ouvert. Par conséquent, le piston auxiliaire 72 est sollicité de façon à annuler le jeu, quelle que soit l'usure de l'embrayage (non représenté). En revanche, dès que le piston principal 68 est déplacé sous la commande de l'électrovalve 14, le clapet anti-retour se ferme, de sorte que le piston auxiliaire 72 se trouve verrouillé à chaque course, dans le piston principal 68. Les diamètres des trous 44, 48, 79 sont calibrés pour constituer des restrictions d'écoulement propres à participer à l'élimination des vibrations, conjointement avec l'amortisseur hydropneumatique.

Ainsi, grâce à l'invention, par rapport à la solution du document EP-A-0 493 992 on réduit les frottements, puisque l'amortisseur est dépourvu de piston et on diminue les bruits. Les temps de réponse sont améliorés et les usinages des passages calibrés 44, 48, 79 sont peu coûteux. L'amortisseur 18, formant capsule, sert avantageusement de butée simultanément au manchon 22 - au mécanisme 66 et au piston 68.

Le montage est également amélioré par la conception en sous-ensembles: manchon 22 - piston 68-69 - mécanisme de rattrapage d'usure 66 - ensemble ressorts 56, 57 avec les coupelles 59 - 58. Ainsi, ces sous-ensembles peuvent être réalisés de manière indépendante et peuvent s'adapter avec peu de modifications à différents embrayages à friction. En particulier, on peut adapter aisément la charge des ressorts 56, 57 à la charge du diaphragme de l'embrayage.

Bien entendu, le couvercle 54 au lieu d'être fixé par sertissage au manchon 22 à l'aide de pattes engagées dans une gorge du manchon, peut être fixé par un autre moyens au manchon 22.

## Revendications

1. Actionneur électro-hydraulique, notamment pour la commande d'un embrayage piloté, comportant un corps (12) abritant une électrovalve (14) du type à battement, des moyens d'amortissement des vibrations (18) et un ensemble hydromécanique (16) comprenant un agencement formant piston (20), mobile dans un alésage (21) fixe et auquel est connecté un élément d'actionnement (24), la sortie de l'électrovalve communiquant avec une cavité (19) où se trouve ledit ensemble hydromécanique, caractérisé en ce que lesdits moyens d'amortissement consistent en un amortisseur hydropneumatique (18), muni d'une paroi mobile ou déformable (34) et logé dans ladite cavité (19) et en ce que l'amortisseur hydropneumatique (18) constitue une butée de repos pour l'agencement formant piston (20) de sorte que l'ensemble hydromécanique (16) et l'amortisseur hydropneumatique (18) sont logés dans le prolongement l'un de l'autre dans une même cavité (19).

2. Actionneur selon la revendication 1, caractérisé en ce que l'amortisseur hydropneumatique (18) constitue un sous-ensemble inséré au fond de ladite cavité (19) et prenant appui sur une paroi d'extrémité (42) de celle-ci.

3. Actionneur selon la revendication 2, caractérisé en ce que ledit agencement formant piston (20) est logé dans un manchon (22) alésé intérieurement, et que ledit manchon (22) est inséré de façon fixe dans ladite cavité (19) en étant immobilisé dans celle-ci en butée contre une partie fixe et rigide (40) dudit amortisseur hydropneumatique (18).

4. Actionneur selon la revendication 3, caractérisé en ce que ledit manchon (22) est solidaire d'un couvercle (54) globalement tubulaire fixé au corps (12) et s'étendant dans le prolongement axial dudit manchon (22) pour montage de ressorts (56,57) prenant appui contre des éléments coaxiaux de l'ensemble hydromécanique (16) pour solliciter des éléments mobiles de l'ensemble hydromécanique (16) vers leur position de repos.

5. Actionneur selon la revendication 3 ou 4, dans lequel ledit agencement formant piston (20) comporte un mécanisme de rattrapage d'usure (66) mécaniquement couplé audit élément d'actionnement (24) en étant installé dans un piston principal (68) dudit agencement formant piston (20) et logé dans le manchon (22), caractérisé en ce que l'amortisseur hydropneumatique (68) sert de butée simultanément au manchon (22), au mécanisme de rattrapage d'usure (66) et au piston principal (68).

6. Actionneur selon la revendication 5, caractérisé en ce que le clapet anti-retour (69) est logé dans le piston principal (68), ledit clapet (69) présentant une tige susceptible de rentrer en contact avec une paroi (49) de l'amortisseur hydropneumatique (18).

7. Actionnneur selon l'une quelconque des revendications 1 à 6, caractérisé en ce que ledit amortisseur (18) est constitué d'une coupelle métallique (32) fermée par une membrane (34) en matériau élastomère, ledit amortisseur étant rempli d'un gaz sous pression.

8. Actionneur selon la revendication 7, caractérisé en ce que ladite coupelle (32) comporte une gorge annulaire (36) dans laquelle vient se loger un bourrelet annulaire (38) de ladite membrane et en ce qu'un élément formant couvercle (40) est fixé, par exemple serti, sur ladite coupelle de façon à maintenir ledit bourrelet dans ladite gorge.

9. Actionneur selon la revendicatiion 8, caractérisé en ce que ledit élément formant couvercle (40) comporte au moins un trou (44) établissant une communication entre ladite sortie de l'électrovalve (14) et une chambre (46) dont une paroi est constituée par ladite membrane, ainsi qu'un trou (48) établissant la communication entre ladite chambre et l'alésage (21) précité de l'agencement formant piston (20).

10. Actionneur selon l'une des revendications 8 ou 9, caractérisé en ce que la partie centrale de ladite membrane comporte un bourrelet (50) dans lequel est inséré un renfort (51), par exemple métallique.

11. Actionneur selon l'une des revendications 8 à 10, caractérisé en ce que ledit élément formant couvercle (40) définit une butée de repos pour ledit agencement formant piston (20).

12. Actionneur selon les revendications 11 et 5, caractérisé en ce que l'élément formant couvercle (40) sert de butée au manchon (22) et au mécanisme de rattrapage d'usure (66).

## Patentansprüche

1. Elektrohydraulisches Stellglied, insbesondere für die Betätigung einer vorgesteuerten Kupplung, mit einem Körper (12), in dem ein Magnetventil (14) in der Ausführung als Schlagventil gelagert ist, Schwingungsdämpfungsmitteln (18) und einer hydromechanischen Einheit (16) mit einer Kolbenanordnung (20), die in einer festen Bohrung (21) beweglich gelagert ist und an die ein Betätigungselement (24) angeschlossen ist, wobei der Ausgang des Magnetventils mit einer Aufnahme (19) in Verbindung steht, in der sich die besagte hydromechanische Einheit befindet, **dadurch gekennzeichnet**, daß die besagten Dämpfungsmittel aus einem hydropneumatischen Dämpfer (18) bestehen, der mit einer beweglichen oder verformbaren Wand (34) versehen und in der besagten Aufnahme (19) gelagert ist, und daß der hydropneumatische Dämpfer (18) einen Ruheanschlag für die Kolbenanordnung (20) bildet, so daß die hydromechanische Einheit (16) und der hydropneumatische Dämpfer (18) in Verlängerung zueinander in der gleichen Aufnahme (19) gelagert sind.

2. Stellglied nach Anspruch 1 , **dadurch gekennzeichnet**, daß der hydropneumatische Dämpfer (18) eine Baugruppe bildet, die am Boden der besagten Aufnahme (19) eingesetzt wird und an einer Abschlußwand (42) dieser Aufnahme zur Auflage kommt.

3. Stellglied nach Anspruch 2 , **dadurch gekennzeichnet**, daß die besagte Kolbenanordnung (20) in einer innen aufgebohrten Muffe (22) gelagert ist und daß die besagte Muffe (22) fest in die besagte Aufnahme (19) eingesetzt ist, wobei sie darin im Anschlag an einen festen und starren Teil (40) des besagten hydropneumatischen Dämpfers (18) gesichert ist.

4. Stellglied nach Anspruch 3 , **dadurch gekennzeichnet**, daß die besagte Muffe (22) fest mit einem insgesamt rohrförmigen Deckel (54) verbunden ist, der am Körper (12) befestigt ist und sich in der axialen Verlängerung der besagten Muffe (22) für den Einbau von Federn (56, 57) erstreckt, die an koaxialen Elementen der hydromechanischen Einheit (16) zur Auflage kommen, um bewegliche Elemente der hydromechanischen Einheit (16) zu ihrer Ruheposition hin zu beaufschlagen.

5. Stellglied nach Anspruch 3 oder 4, bei welchem die besagte Kolbenanordnung (20) einen Verschleißausgleichmechanismus (66) umfaßt, der mechanisch mit dem besagten Betätigungselement (24) verbunden ist, wobei er in einen Hauptkolben (68) der besagten Kolbenanordnung (20) eingebaut und in der Muffe (22) gelagert ist, **dadurch gekennzeichnet**, daß der hydropneumatische Dämpfer (68) gleichzeitig als Anschlag für die Muffe (22), den Verschleißausgleichmechanismus (66) und den Hauptkolben (68) dient.

6. Stellglied nach Anspruch 5 , **dadurch gekennzeichnet**, daß das Rückschlagventil (69) im Hauptkolben (68) gelagert ist, wobei das besagte Rückschlagventil (69) einen Stift aufweist, der mit einer Wand (49) des hydropneumatischen Dämpfers (18) in Berührung kommen kann.

7. Stellglied nach einem der Ansprüche 1 bis 6 , **dadurch gekennzeichnet**, daß der besagte Dämpfer (18) aus einem Metallteller (38) besteht, der durch eine Membran (34) aus Elastomermaterial verschlossen ist, wobei der besagte Dämpfer mit einem Druckgas befüllt ist.

8. Stellglied nach Anspruch 7 , **dadurch gekennzeichnet**, daß der besagte Teller (32) eine ringförmige Auskehlung (36) umfaßt, in der ein ringförmiger Wulst (38) der besagten Membran aufgenommen wird, und daß ein Deckelelement (40) an dem besagten Teller befestigt, beispielsweise aufgefalzt, wird, um den besagten Wulst in der besagten Auskehlung zu halten.

9. Stellglied nach Anspruch 8 , **dadurch gekennzeichnet**, daß das besagte Deckelelement (40) wenigstens ein Loch 844) enthält, das eine Verbindung zwischen dem besagten Ausgang des Magnetventils (14) und einer Kammer (46) herstellt, von der eine Wand durch die besagte Membran gebildet wird, sowie ein Loch (48), das die Verbindung zwischen der besagten Kammer und der vorerwähnten Bohrung (21) der Kolbenanordnung (20) herstellt.

10. Stellglied nach einem der Ansprüche 8 oder 9, **dadurch gekennzeichnet**, daß der Mittelteil der besagten Membran einen Wulst (50) umfaßt, in den eine Verstärkung (51), beispielsweise aus Metall, eingesetzt ist.

11. Stellglied nach einem der Ansprüche 8 bis 10, **dadurch gekennzeichnet**, daß das besagte Deckelelement (40) einen Ruheanschlag für die besagte Kolbenanordnung (20) bildet.

12. Stellglied nach den Ansprüchen 11 und 5 , **dadurch gekennzeichnet**, daß das Deckelelement (40) als Anschlag für die Muffe (22) und den Verschleißausgleichmechanismus (66) dient.

## Claims

1. An electrohydraulic actuator, especially for the control of a clutch of the governed type, comprising a body (12) enclosing within it a poppet-type electro-mechanical valve (14), vibration damping means (18), and a hydromechanical assembly (16) including a piston means (20), which is movable in a fixed bore (21) and to which an actuating element (24) is connected, the outlet of the electromechanical valve being in communication with a cavity (19) in which the said hydromechanical assembly is located, characterised in that the said damping means consist of a hydropneumatic damper (18), having a movable or deformable wall (34) and lodged in the said cavity (19), and in that the hydropneumatic damper (18) constitutes a rest abutment for the piston means (20), in such a way that the hydromechanical assembly (16) and hydropneumatic damper (18) are mounted in a common cavity (19) as longitudinal extensions of each other.

2. An actuator according to Claim 1, characterised in that the hydropneumatic damper (18) constitutes a sub-assembly inserted in the base of the said cavity (19) and in engagement on an end wall (42) of the latter.

3. An actuator according to Claim 2, characterised in that the said piston means (20) is disposed within a sleeve (22) having an internal bore, and in that the said sleeve (22) is inserted fixedly in the said cavity (19), in which it is immobilised in abutment against a fixed and rigid portion (40) of the said hydropneumatic damper (18).

4. An actuator according to Claim 3, characterised in that the said sleeve (22) is fixed to a generally tubular cover member (54), which is secured to the body (12) and which constitutes an axial extension of the said sleeve (22), for the mounting of springs (56, 57) that bear against coaxial elements of the hydromechanical assembly (16), so as to urge movable elements of the hydromechanical assembly (16) towards their rest position.

5. An actuator according to Claim 3 or Claim 4, in which the said piston means (20) includes a wear compensating mechanism (66) which is coupled mechanically to the said actuating element (24), being installed within a main piston (68) of the said piston means (20) and mounted within the sleeve (22), characterised in that the hydropneumatic damper (18) serves as an abutment simultaneously for the sleeve (22), wear compensating mechanism (66) and main piston (68).

6. An actuator according to Claim 5, characterised in that the non-return valve (69) is disposed inside the main piston (68), the said valve (69) having a rod element arranged to make contact with a wall (49) of the hydropneumatic damper (18).

7. An actuator according to any one of Claims 1 to 6, characterised in that the said damper (18) comprises a metallic cup element (32) closed by a membrane (34) of elastomeric material, the said damper being filled with a pressurised gas.

8. An actuator according to Claim 7, characterised in that the said cup element (32) has an annular groove (36) in which an annular bead (38) of the said membrane is fitted, and in that a cover element (40) is fixed, for example by seaming, on the said cup element in such a way as to retain the said bead in the said groove.

9. An actuator according to Claim 8, characterised in that the said cover element (40) has at least one hole (44) which provides communication between the said outlet of the electro-mechanical valve (14) and a chamber (46), one wall of which is defined by the said membrane, together with a hole (48) providing communication between the said chamber and the said bore (21) of the piston means (20).

10. An actuator according to Claim 8 or Claim 9, characterised in that the central portion of the said membrane comprises a bead (50) in which is inserted a reinforcing element (51), which is for example of metal.

11. An actuator according to one of Claims 8 to 10, characterised in that the said cover element (40) defines a rest abutment for the said piston means (20).

12. An actuator according to Claims 11 and 5, characterised in that the cover element (40) serves as an abutment for the sleeve (22) and for the wear compensating mechanism (66).
